# EUROPÄISCHE PATENTSCHRIFT

(11) **EP 1 044 843 B1**
(45) Veröffentlichungstag und Bekanntmachung des Hinweises auf die Patenterteilung: **14.06.2006**
(21) Anmeldenummer: 00107257.8
(22) Anmeldetag: 03.04.2000
(51) Int. Cl.: B60W 10/02, B60W 10/04, B60W 10/10, F16H 61/21

(54) **Antriebsstrang mit einem Motor, einem Getriebe und einer Bremse, und Steuerungsverfahren dafür**
Vehicle drivetrain comprising engine, brakes and transmission, and associated control method
Châine de transmission pour véhicules, avec procédé de régulation du moteur, freins, et boîte de vitesses

(30) Priorität: 13.04.1999 DE 19916637
(43) Veröffentlichungstag der Anmeldung: 18.10.2000
(73) Patentinhaber: SIEMENS AKTIENGESELLSCHAFT, 80333 München (DE)
(72) Erfinder: Graf, Friedrich, 93049 Regensburg (DE); Probst, Gregor, 84028 Landshut (DE); Gutknecht-Stöhr, Florian, 93047 Regensburg (DE)

(56) Entgegenhaltungen:
- EP-A- 0 270 708
- DE-A- 19 734 567
- US-A- 4 501 170
- US-A- 5 105 923
- US-A- 5 203 235

## Beschreibung

Die Erfindung betrifft eine Verfahren und eine Steueranordnung zum Steuern des Antriebsstrangs eines Kraftfahrzeugs. Eine derartige Antriebsstrangsteuerung schließt einerseits einen Motor und eine Motorsteuerung ein, durch die Größen gesteuert werden, die das Motordrehmoment beeinflussen, wie z. B. der Zündzeitpunkt und die Kraftstoffzumessung zu den Zylindern. Sie schließt andererseits auch ein automatisches Getriebe und eine Getriebesteuerung ein, durch die Schaltvorgänge des automatischen Getriebes gesteuert werden.

Bei bekannten Getriebesteuerungen für Kraftfahrzeuge wird die Übersetzung des Getriebes in Abhängigkeit von der Fahrpedalstellung und von der Fahrgeschwindigkeit anhand von abgespeicherten Kennfeldern automatisch eingestellt. Statt der Fahrpedalstellung im engeren Sinne kann auch das Signal eines sogenannten elektronischen Gaspedals (E-Gas) oder eine andere von dem Motormoment, das der Fahrer anfordert, abgeleitete Größe verwendet werden. Dabei werden verschiedene Fahrparameter und Betriebszustände des Kraftfahrzeugs berücksichtigt (WO 97/01051). Die Auswahl des jeweils zu schaltenden Ganges oder - bei stufenlosen Getrieben - der einzustellenden Übersetzung erfolgt durch Steuerschaltungen, die z. B. nach den Methoden der Fuzzy-Logik arbeiten. Mit dieser Logik wird Expertenwissen, das durch Erfahrung gewonnen worden ist, in Form einer sogenannten Regelbasis beschrieben und damit für die Regel- oder Steuervorgänge des Kraftfahrzeug-Getriebes verwendet. Die Logikschaltung erzeugt Steuersignale, mit denen u. a. die Übersetzung des Getriebes festgelegt wird.

Eine bekannte integrierte Antriebsstrangsteuerung für ein Kraftfahrzeug interpretiert die Stellung des Fahrpedals und des Bremspedals als ein vom Fahrer gewünschtes Radmoment (DE 196 37 210 A1). Sie weist eine Berechnungseinrichtung auf, durch die die Stellungen des Fahrpedals und des Bremspedals empfangen und daraus zentrale Steuerparameter für die Antriebsquellen und die verzögernden Einheiten des Antriebsstrangs erzeugt werden.

Es ist bekannt, die für die Antriebsräder eines Fahrzeugs bestimmten Sollbremsmomente durch Motorbremsmomente und Betriebsbremsmomente zu erzeugen (DE 42 30 101 A1).

Aus der Druckschrift DE 43 30 391 A1 ist auch ein Verfahren zum Steuern eines Antriebsstrangs eines Kraftfahrzeugs bekannt, bei dem ein vom Fahrer durch Betätigen des Bremspedals ausgelöstets Bremssignal abhängig von der Bremswirkung durch Rückschalten des automatischen Getriebes ein Motorbremsmoment erzeugt. Das Motorbremsmoment kann dabei entweder konstant oder gemäß einer Kennlinie variabel bemessen sein.

Das Dokument US 5,105,923 offenbart ein Verfahren zur Steuerung einer Motorbremsung für ein automatisches Kraftfahrzeuggetriebe. Aus Sensorsignalen werden die Fahrzeuggeschwindigkeit, der Öffnungswinkel der Drosselklappe und ein Betrag und eine Geschwindigkeit des Niederdrückens des Bremspedals abgeleitet. Auf Grundlage des aktuell abgeleiteten Betrages für das Niederdrücken des Bremspedals und auf Grundlage eines früheren Betrages für das Niederdrücken wird außerdem eine Geschwindigkeit des Niederdrückens des Bremspedals berechnet. Anschließend werden der Öffnungswinkel der Drosselklappe, die Geschwindigkeit des Niederdrückens des Bremspedals, der Betrag des Niederdrückens des Bremspedals und die Fahrzeuggeschwindigkeit mit vorgegebenen Grenzwerten verglichen und abhängig von diesen Vergleichen wird bei einer speziellen Konstellation von Vergleichsergebnissen ein Steuerbefehl ausgegeben, um ein Herunterschalten des Ganges zu bewirken.

Es gibt Fahrsituationen, bei denen eine Betätigung der Bremsen durch den Fahrer zweckmäßigerweise durch den Antriebsstrang des Kraftfahrzeugs unterstützt werden sollte. Der Erfindung liegt daher die Aufgabe zugrunde, eine Steuerung für den Antriebsstrang eines Kraftfahrzeugs zu schaffen, die einen Fahrerbremswunsch erkennt und die gewünschte Bremswirkung durch Steuern der Übersetzung des automatischen Getriebes wirksam unterstützt.

Dieses Problem wird erfindungsgemäß durch ein Verfahren und eine Steuerung mit den Merkmalen der unabhängigen Ansprüche 1 und 9 gelöst. Vorteilhafte Weiterbildungen der Erfindung sind in den Unteransprüchen niedergelegt.

Betätigungen des Bremspedals durch den Fahrer werden als Bremsmomentwunsch interpretiert. Die Gangwahl erfolgt dann mit Hilfe von momentenbasierten Rückschaltkennlinien. Die Motorcharakteristik kann mit signifikanten Größen von der Motorsteuerung an die Getriebesteuerung in komprimierter Form, d. h. mit sehr wenigen Daten, übermittelt werden, um beide Systeme möglichst weitgehend zu entkoppeln. Die Rückschaltkennlinien werden möglichst unabhängig von dem Motor definiert und enthalten insbesondere kein Drehmomentmodell des Motors.

Die Motorcharakteristik konzentriert sich auf die Schnittstelle zwischen Getriebe und Motor. Die Rückschaltkennlinien können dadurch in großem Umfang motorunabhängig definiert werden. Damit entfällt die Notwendigkeit, sie an unterschiedliche Motortypen individuell anzupassen. Dies führt bei der schon heute zu beobachtenden und zukünftig vermehrt zu erwartenden Vielzahl der Optionen für ein Kraftfahrzeug - der sogenannten einheitlichen Plattform mit unterschiedlichen Motor- und Getriebeausstattungen - zu einer beachtlichen Verringerung des Entwicklungsaufwands für die Antriebsstrangsteuerung.

Ein Ausführungsbeispiel der Erfindung wird im folgenden anhand der Figuren erläutert. Es zeigt:

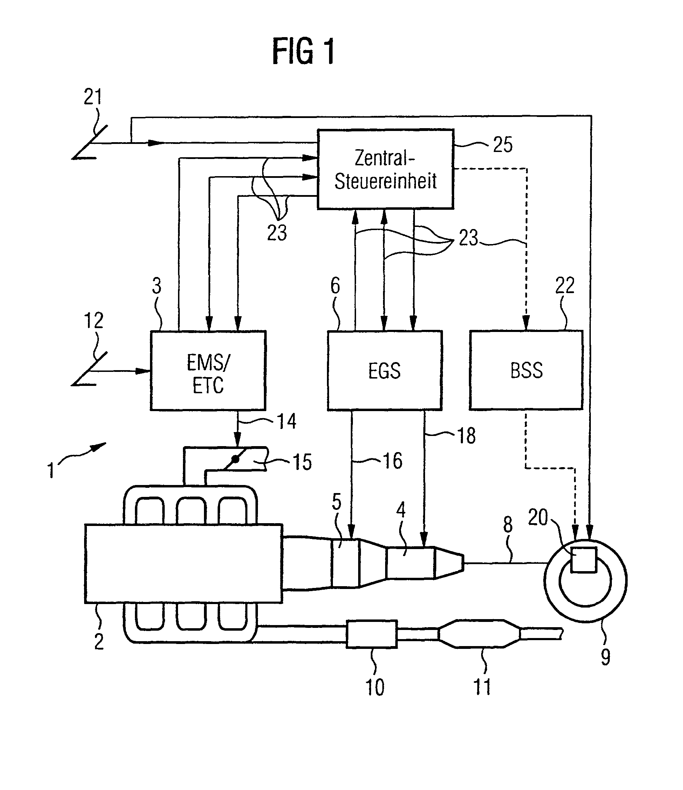

- Figur 1: eine schematische Darstellung des Antriebsstrangs eines Kraftfahrzeugs mit einer erfindungsgemäßen Antriebsstrangsteuerung,
- Figur 2: ein Flußdiagramm zur Erläuterung des erfindungsgemäßen Verfahrens und
- Figur: 3 ein momentenbasiertes Rückschaltkennfeld.

Ein schematisch dargestellter Antriebsstrang 1 eines Kraftfahrzeugs schließt ein: einen Motor 2 mit einer elektronischen Motorsteuerung 3, die auch die Funktion einer elektronischen Drosselklappenregelung ETC durchführen kann, ein automatisches Getriebe 4 mit einem Drehmomentwandler 5 und einer elektronischen Getriebesteuerung 6. In dem Ausführungsbeispiel ist das Getriebe als hydraulisches Planetengetriebe mit Wandler-Überbrückungskupplung ausgeführt. Eine erfindungsgemäße Steuerung läßt sich aber genausogut für andere Automatikgetriebe, wie automatisierte Handschaltgetriebe oder kontinuierlich verstellbare Getriebe (CVT, IVT), verwenden. Der Radantrieb ist durch eine Gelenkwelle 8 und ein angetriebenes Rad 9 angedeutet, die Abgasanlage durch einen Katalysator 10 und einen Schalldämpfer 11.

Über ein Fahrpedal 12 übermittelt der Fahrer seine Wünsche an die Motorsteuerung 3, die ihrerseits den Motor entsprechend steuert. Angedeutet ist das durch eine Signalleitung 14, über die eine Drosselklappe 15 verstellt wird. Nicht dargestellt sind, da allgemein bekannt, die Steuerung des Einspritzzeitpunkts und der in den Motor eingespritzten Kraftstoffmenge.

Die Getriebesteuerung 6 steuert über eine Signalleitung 16 eine nicht dargestellte Überbrückungskupplung - oder Trockenkupplung bei automatisierten Handschaltgetrieben - für den Drehmomentwandler 5 und über eine Signalleitung 18 die Übersetzung des Getriebes 4. Ein Bremsaktuator 20 ist entweder unmittelbar, z. B. über eine Hydraulikleitung, mit einem Bremspedal 21 verbunden oder wird im Fall einer elektronisch gesteuerten Betriebsbremse (brake by wire) durch eine Bremssteuerung 22, die ein ABS-System, eine Antriebsschlupfregelung und eine Fahrstabilitätsregelung einschließen kann, gesteuert. Über das Bremspedal 21 übermittelt der Fahrer seine Bremswünsche an eine Zentral-Steuereinheit 25. Die Motorsteuerung 3, die Getriebesteuerung 6 und die optionale Bremssteuerung 22 sind über Signalleitungen 23 -unidirektionale oder bidirektionale, z. B. in Form eines Datenbusses - mit der Zentral-Steuereinheit 25 verbunden, die eine Koordination zwischen den einzelnen Steuergeräten 3, 6, 22 gewährleisten. Über die Signalleitungen werden Informationen über Betriebsgrößen des Kraftfahrzeugs und Steuersignale, insbesondere in Form von physikalischen Beschreibungsgrößen, untereinander ausgetauscht. Die Zentral-Steuereinheit 25 führt auf Basis dieser Daten eine koordinierte Berechnung der zentralen Betriebsparameter des gesamten Antriebsstrangs durch. Dies ermöglicht eine umfassende Steuerung von Motor, Getriebe und gegebenenfalls Betriebsbremse.

Der Austausch von Daten in Form von physikalischen Beschreibungsgrößen zwischen den einzelnen Steuergeräten erfolgt z. B. momentenbasiert. Unter "momentenbasiert" ist folgendes zu verstehen: Wird zum Beispiel vom Getriebe eine Motormomentreduktion gewünscht, so wird unmittelbar das gewünschte Motormoment und nicht z.B. eine gewünschte Zündwinkelverstellung an die Zentral-Steuereinheit übertragen.

Im Ausführungsbeispiel sind alle Steuergeräte und zu steuernden Aggregate als getrennte Hardware-Einheiten dargestellt. Die Steuergeräte können allerdings auch als sogenannte Vororteinheiten mit dem jeweils zu steuernden Aggregat zusammengebaut oder in dieses integriert sein. So ist es z. B. sinnvoll, die Bremssteuerung im Falle eines elektrischen Bremsaktuators mit dem Bremsaktuator zusammenzufassen. Ebenso kann die Funktionalität der Zentral-Steuereinheit in einem der Steuergeräte integriert sein. An der Steuerfunktion ändert sich dadurch nichts.

Der Antriebsstrang eines Kraftfahrzeugs wird bekanntlich derart gesteuert, daß die Übersetzung des automatischen Getriebes in Abhängigkeit zumeist von der Stellung des Fahrpedals und der Geschwindigkeit des Kraftfahrzeugs anhand von Kennfeldern, die in der Getriebesteuerung gespeichert sind, automatisch festgelegt wird. Dabei können auch verschiedene Fahrzustände oder der Lastzustand des Kraftfahrzeugs berücksichtigt werden.

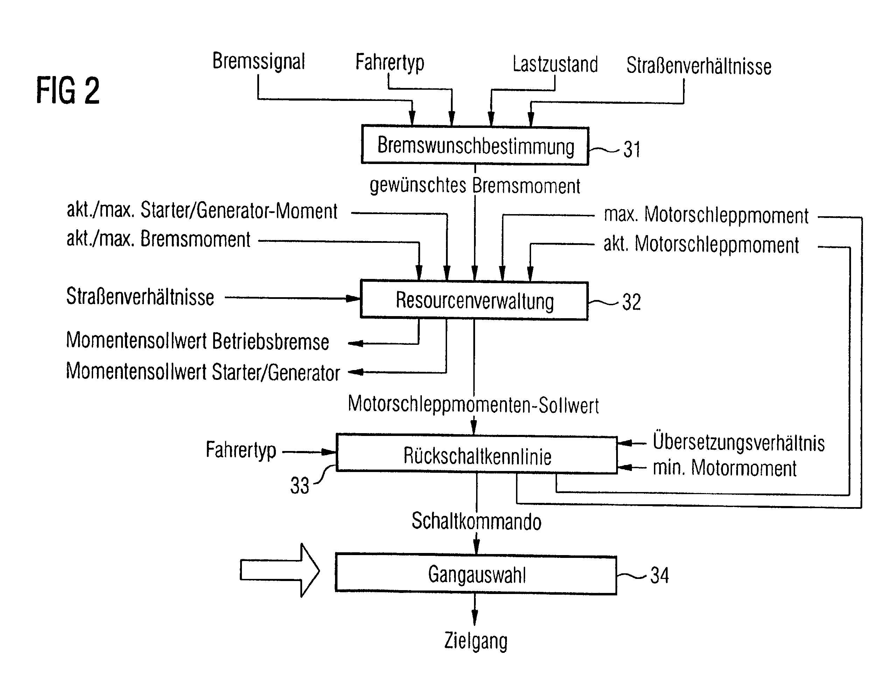

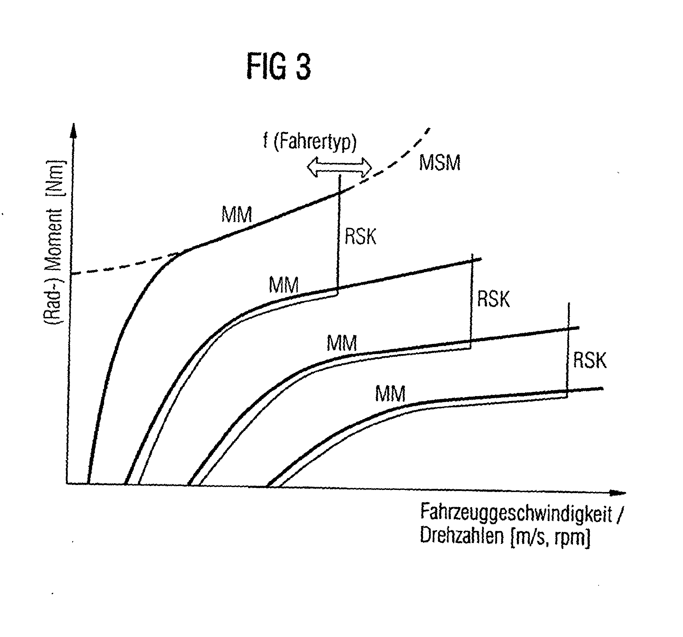

Gemäß der vorliegenden Erfindung bewertet oder analysiert die Zentral-Steuereinheit einen Bremsmomentwunsch oder Fahrzeugverzögerungswunsch des Fahrers des Kraftfahrzeugs - der durch Betätigen des Bremspedals geäußert wird - und führt eine die Bremswirkung der Bremsanlage unterstützende Änderung der Getriebeübersetzung durch. Das vorstehend erwähnte Verfahren zum Steuern des Antriebsstrangs eines Kraftfahrzeugs und die Wirkungsweise der zugehörigen Steuerung wird nun anhand der Figuren 2 und 3 eingehend erläutert.

In einem Block oder Stufe 31 "Bremswunschbestimmung" wird auf Basis eines Bremssignals ein gewünschtes Bremsmoment, z. B. in Form eines negativen Radmoments oder auch als Soll-Radumfangskraft oder Soll-Getriebe-Ausgangsdrehmoment, bestimmt. Als Bremssignal dient dabei entweder das Ausgangssignal eines Pedalwertgebers oder Bremskraftsimulators, welches eine direkte Umrechnung einer Bremspedalbetätigung in eine gewünschte Fahrzeugverzögerung zuläßt. Derartige Pedalwertgeber oder Bremskraftsimulatoren werden insbesondere bei elektronisch gesteuerten Betriebsbremsen verwendet. Alternativ dazu kann das Bremssignal aber auch von einem einfachen Schalter am Bremspedal ausgehen, der lediglich die Aktivierung des Bremspedals signalisiert. Ein derartiger Schalter ist in allen bekannten Fahrzeugen zur Steuerung der Bremsleuchten vorhanden. Das gewünschte Bremsmoment muß in diesem Fall aus Meßwerten der Fahrzeugverzögerung und der Fahrzeugmasse geschätzt werden. Bei der Bestimmung des gewünschten Bremsmoments in Block 31 können neben dem Bremssignal auch weitere Betriebsparameter, wie der Fahrertyp, der Lastzustand oder die Straßenverhältnisse (z. B. Wintermodus), berücksichtigt werden. Hierzu sind weitere Eingangssignale notwendig, wie z. B. das Differenzmoment aus dem Vergleich von gemessenem aktuellen Fahrwiderstand und abgelegter Fahrwiderstandskennlinie zur Bestimmung des Lastzustandes. Allgemein kann die Umsetzung der Bremspedalstellung in ein Radmoment mit einem Fuzzy-System erfolgen, das die mehrfachen Abhängigkeiten zu einem Soll-Radmoment kombiniert.

Je nach Art und Anzahl der nutzbaren, elektronisch steuerbaren Bremsaggregate wird im Block 32 "Resourcenverwaltung" unter Anwendung geeigneter Strategien die Verteilung des gewünschten Bremsmoments auf die einzelnen Aggregate festgelegt. Neben der Änderung der Getriebeübersetzung - im folgenden auch als Schleppmomentbremsung bezeichnet - werden auch im Antriebsstrang vorhandene Starter/ Generator-Motoren und elektronisch gesteuerte Betriebsbremsen (brake by wire) zur Verzögerung des Kraftfahrzeugs verwendet und durch die Zentral-Steuereinheit gesteuert. Um eine geregelte Verteilung des gewünschten Bremsmoments auf die vorhandenen, elektronisch steuerbaren Bremsaggregate zu ermöglichen, werden dem Block 32 jeweils die aktuellen und die maximalen Werte des Starter/Generator-Moments des Betriebsbremsmoments und des Motorschleppmoments zugeführt. Bei der Verteilung des gewünschten Bremsmoments auf die vorhandenen Bremsaggregate sind verschiedenste Strategien denkbar. Beispielsweise kann bei einer Betätigung des Bremspedals durch den Fahrer zunächst lediglich die Schleppmomentbremsung angefordert werden, um ohnehin vorhandene Verlustquellen bei geschlossenem Antriebsstrang auszunutzen. Zur Rückgewinnung von Bewegungs-energie wäre die Bremsung mit Hilfe des Starter/Generator-Motors ebenfalls vor der Betriebsbremse zu aktivieren. Dabei muß jedoch die Aufnahmekapazität der Batterie berücksichtigt werden. Auch in der Resourcenverwaltung können weitere Betriebsparameter des Fahrzeugs berücksichtigt werden. So kann z. B. bei ungünstigen Straßenverhältnissen auf die schlecht regelbare Bremsung durch das Motorschleppmoment verzichtet oder deren Funktionsumfang beschränkt werden, da eine zur Schlupfreduktion theoretisch denkbare Erhöhung der Motorleistung in diesem Fall zusätzlichen Energieaufwand bedeuten würde.

In einem Block 33 "Rückschaltkennlinien", der anhand von Figur 3 noch näher erläutert wird, wird unter Berücksichtigung des Fahrertyps, des aktuellen Übersetzungsverhältnisses des Antriebsstrangs und des Werts des minimalen Motormoments die Notwendigkeit eines Getriebeeingriffs bezüglich des von der Resourcenverwaltung ermittelten Motorschleppmomenten-Sollwerts abgeprüft und ggf. über ein Schaltkommando an einen Block 34 "Gangauswahl" weitergegeben. Unter Berücksichtigung von weiteren Einflußgrößen - angedeutet durch den breiten Pfeil -, wie z.B. der aktuellen Fahrsituation oder der Bremsdauer, wird im Block 34 das Einlegen eines neuen Zielgangs oder einer neuen Zielübersetzung gesteuert. Bei einem starken Gradienten des Bremswunsches ist es beispielsweise vorteilhaft, die Ausgabe eines einfachen Rückschaltbefehls zu verzögern, um durch eine Doppelrückschaltung (z. B. 5-3-Schaltung) unter Berücksichtigung der Dauer des aktuellen Bremsvorgangs und der durch schneller wirkende Bremssysteme (z. B. die Betriebsbremse) bereits bewirkten Verzögerung des Fahrzeugs eine signifikante Bremswirkung zu erzielen. Eine derartige Funktion kann im Block 34 realisiert werden und wird vorteilhafterweise durch den Wintermodus deaktiviert, um starke Sprünge des Radmoments auf glatter Fahrbahn zu vermeiden. Ansonsten ist die Funktionsweise einer Gangauswahl allgemein bekannt und wird deshalb hier nicht näher erläutert.

In Figur 3 ist eine mögliche Ausführung der Rückschaltkennlinien dargestellt. Auf der Abszisse des Diagramms ist eine mit der Fahrzeuggeschwindigkeit funktionell verbundene Größe, wie Abtriebsdrehzahl des Getriebes, Motordrehzahl oder Fahrzeuggeschwindigkeit selbst, aufgetragen. Auf der Ordinate des Kennfelds ist das vom Fahrer gewünschte Drehmoment in Form einer mit dem Radmoment funktionell verbundenen Größe, wie Getriebeausgangsmoment, Motormoment oder negatives Radmoment selbst, aufgetragen. Bei geschlossener Drosselklappe weist der Motor ein vorgegebenes, drehzahlabhängiges Schleppmoment MSM (gestrichelte Linie) auf, das bei niedrigen Drehzahlen zur Einhaltung des Leerlaufdrehzahlwertes durch den Leerlaufregler zu einem minimalen Motormoment MM (dicke Linien) hin begrenzt wird. In der Figur sind vier unterschiedliche Getriebestufen dargestellt. Die tatsächliche Anzahl der Gangstufen kann auch kleiner sein (> 1) und ist nach oben unbegrenzt. Aufgrund des großen Übersetzungssprunges ist es im allgemeinen nicht erwünscht, die Rückschaltung in den ersten Gang zuzulassen, so daß eine untere Grenze für zulässige Rückschaltungen vorzusehen ist. Diese untere Grenze kann auch situationsabhängig festgelegt werden und beispielsweise im Wintermodus auf einen höheren Gang verschoben werden, um das maximale Bremsmoment zu begrenzen.

Ziel der Auslegung der Rückschaltkennlinien RSK ist es, den Verlauf des minimalen Motormoments MM möglichst genau abzubilden. Dabei bietet eine direkte Übernahme des in der Motorsteuerung kalibrierten Wertes, z. B. durch Datenübertragung in der Initialisierungsphase, den größten Vorteil bei der Verwendung in mehreren Fahrzeugtypen. Die Kennlinie aus der Motorsteuerung ist durch Einbeziehen der Getriebeübersetzungen in den einzelnen Gängen und des Reifenabrollmaßes umzurechnen. Auch die maximal erwünschte Drehzahl nach einer Rückschaltung muß festgelegt werden. Dabei kann neben der maximal vom Motor zugelassenen Drehzahl auch eine vom Fahrertyp abhängige Schwelle vorgegeben werden. Denkbar ist hier z. B. die Reduktion der Maximaldrehzahl zur Geräuschbegrenzung bei komfortorientierten Fahrern. Durch senkrechtes Ansteigen der Kennlinien oberhalb der maximal erwünschten Drehzahl wird eine Rückschaltung bei höheren Geschwindigkeiten oder Drehzahlen verhindert.

Die Ermittlung der Getriebeübersetzung erfolgt adaptiv, indem in Abhängigkeit vom Fahrstil des jeweiligen Fahrers und dem Fahrzustand des Kraftfahrzeugs ein geeignetes Kennfeld ausgewählt wird oder ein Grundkennfeld entsprechend modifiziert, z.B. verschoben, wird.

## Patentansprüche

1. Verfahren zum Steuern des Antriebsstrangs eines Kraftfahrzeugs,
- bei dem ein vom Fahrer durch Betätigen des Bremspedals (21) ausgelöstes Bremssignal in ein gewünschtes Bremsmoment umgesetzt wird,
- bei dem auf Basis des gewünschten Bremsmoments ein Motorschleppmomenten-Sollwert bestimmt wird und
- bei dem die Übersetzung eines automatischen Getriebes (4) anhand eines Rückschaltkennfeldes
- aus dem die einzustellende Sollübersetzung in Abhängigkeit einerseits vom Motorschleppmomenten-Sollwert und andererseits von einer funktionell mit der Fahrzeuggeschwindigkeit verbundenen Größe bestimmbar ist und
- dessen Kennlinien (RSK) unter Berücksichtigung des minimalen Motordrehmoments festgelegt sind, automatisch festgelegt wird.

2. Verfahren nach Anspruch 1, **dadurch gekennzeichnet, daß** das Bremssignal abhängig von verschiedenen Betriebsparametern des Fahrzeugs in ein gewünschtes Bremsmoment umgesetzt wird.

3. Verfahren nach Anspruch 1 oder 2, **dadurch gekennzeichnet, daß** das Rückschaltkennfeld die Übersetzung des Getriebes (4) als Funktion einer funktionell mit dem Radmoment verbundenen und einer funktionell mit der Fahrzeuggeschwindigkeit verbundenen Größe enthält.

4. Verfahren nach einem der vorhergehenden Ansprüche, **dadurch gekennzeichnet, daß** die Rückschaltkennlinien unter Berücksichtigung einer maximal gewünschten Drehzahl nach einer Rückschaltung festgelegt werden.

5. Verfahren nach einem der vorhergehenden Ansprüche, **dadurch gekennzeichnet, daß** im Rückschaltkennfeld eine untere Grenze für zulässige Rückschaltungen vorgesehen ist.

6. Verfahren nach einem der vorhergehenden Ansprüche, **dadurch gekennzeichnet, daß** die Ermittlung der Übersetzung adaptiv bezüglich des Fahrstils und der Fahrsituation erfolgt.

7. Verfahren nach Anspruch 1 oder 2, **dadurch gekennzeichnet, daß** auf Basis des gewünschten Bremsmoments Momenten-Sollwerte für alle vorhandenen, elektronisch steuerbaren Bremsaggregate (2, 4, 20) bestimmt werden.

8. Verfahren nach Anspruch 7, **dadurch gekennzeichnet, daß** das gewünschte Bremsmoment abhängig von verschiedenen Betriebsparametern des Kraftfahrzeugs auf die vorhandenen, elektronisch steuerbaren Bremsaggregate (2, 4, 20) verteilt wird.

9. Antriebsstrangsteuerung (1) eines Kraftfahrzeugs mit einem Motor (2) und einem automatischen Getriebe (4), die aufweist
- eine Motorsteuerung (3) zum Steuern von das Motordrehmoment beeinflußenden Größen,
- eine Getriebesteuerung (6) zum Steuern der Übersetzung des automatischen Getriebes (4),
- eine Zentral-Steuereinheit (25)
- zum Umsetzen einer Betätigung des Bremspedals (21) in ein gewünschtes Bremsmoment,
- zum Bestimmen eines Motorschleppmomenten-Sollwertes auf Basis des gewünschten Bremsmoments und
- zum Festlegen der Übersetzung des automatischen Getriebes (4) abhängig vom Motorschleppmomenten-Sollwert anhand eines Rückschaltkennfeldes.

10. Antriebsstrangsteuerung nach Anspruch 9, **dadurch gekennzeichnet, daß** alle vorhandenen, elektronisch steuerbaren Bremsaggregate (2, 4, 20) von der Zentral-Steuereinheit (25) gesteuert werden.

## Claims

1. Method for controlling the drive train of a motor vehicle,
- in which a brake signal initiated by the driver by actuating the brake pedal (21) is converted into a desired braking torque,
- in which on the basis of the desired braking torque a desired value of the engine drag moment is determined and
- in which the transmission ratio of an automatic transmission (4) is automatically determined on the basis of a downshift performance graph
- from which the desired transmission ratio to be set, on the one hand, depending on the desired value of the engine drag moment and, on the other hand, on a functional variable connected with the speed of the motor vehicle, can be determined and
- the characteristic curves (RSK) of which are determined with due consideration of the minimum engine torque.

2. Method in accordance with claim 1, **characterized in that** the brake signal, depending on different operating parameters of the motor vehicle, is converted into a desired braking torque.

3. Method in accordance with claim 1 or 2, **characterized in that** the downshift performance graph contains the transmission ratio of the transmission (4) as a function of a variable connected functionally with the wheel torque and a variable connected functionally with the speed of the vehicle.

4. Method in accordance with one of the preceding claims, **characterized in that** the downshift characteristic curves are determined, with due regard to a maximum desired rotational speed, after a downshift.

5. Method in accordance with one of the preceding claims, **characterized in that** in the downshift performance graph there is a lower limit for permissible downshifts.

6. Method in accordance with one of the preceding claims, **characterized in that** the transmission ratio is determined adaptively with regard to the driving style and the driving condition.

7. Method in accordance with claim 1 or 2, **characterized in that** on the basis of the desired braking torque, desired values for the torque are determined for all the existing, electronically controllable brake units (2, 4, 20).

8. Method in accordance with claim 7, **characterized in that** the desired braking torque depending on different operating parameters of the motor vehicle is distributed to the existing, electronically controllable brake units (2, 4, 20) .

9. Drive train control (1) of a motor vehicle with an engine (2) and an automatic transmission (4), which has
- an engine control (3) for controlling the variables influencing the engine torque,
- a transmission control (6) for controlling the transmission ratio of the automatic transmission (4),
- a central control unit (25)
- for converting an actuation of the brake pedal (21) into a desired braking torque,
- for determining a desired value of the engine drag moment on the basis of the desired braking torque and
- for determining the transmission ratio of the automatic transmission (4) depending on the desired value of the engine drag moment on the basis of a downshift performance graph.

10. Drive train control in accordance with claim 9, **characterized in that** the central control unit (25) controls all the existing, electronically controllable brake units (2, 4, 20).

## Revendications

1. Procédé pour commander la chaîne de transmission d'un véhicule automobile,
- dans lequel on convertit un signal de freinage émis par le conducteur en actionnant la pédale de frein (21) en un couple de freinage souhaité,
- dans lequel on détermine une valeur de consigne du couple d'inertie du moteur sur la base du couple de freinage souhaité, et
- dans lequel on fixe automatiquement la démultiplication d'une boîte de vitesses automatique (4) à l'aide d'un diagramme caractéristique de rétrogradation,
- à partir duquel la démultiplication de consigne à établir peut être déterminée en fonction d'une part de la valeur de consigne du couple d'inertie du moteur et d'autre part d'une grandeur fonctionnellement liée à la vitesse du véhicule, et
- dont les courbes caractéristiques (RSK) sont fixées en tenant compte du couple moteur minimal.

2. Procédé selon la revendication 1, **caractérisé en ce que** l'on convertit le signal de freinage en un couple de freinage souhaité en fonction de différents paramètres de fonctionnement du véhicule.

3. Procédé selon la revendication 1 ou 2, **caractérisé en ce que** le diagramme caractéristique de rétrogradation contient la démultiplication de la boîte de vitesses (4) en fonction d'une grandeur fonctionnellement liée au couple de roue et d'une grandeur fonctionnellement liée à la vitesse du véhicule.

4. Procédé selon l'une quelconque des revendications précédentes, **caractérisé en ce que** les courbes caractéristiques de rétrogradation sont fixées en tenant compte d'un régime maximal souhaité après une rétrogradation.

5. Procédé selon l'une quelconque des revendications précédentes, **caractérisé en ce qu'**il est prévu dans le diagramme caractéristique de rétrogradation une limite inférieure pour des rétrogradations admissibles.

6. Procédé selon l'une quelconque des revendications précédentes, **caractérisé en ce que** l'on effectue la détermination de la démultiplication de manière adaptative par rapport au style de conduite et à la situation de conduite.

7. Procédé selon la revendication 1 ou 2, **caractérisé en ce que** l'on détermine des valeurs de consigne pour tous les ensembles à commande électronique présents (2, 4, 20) sur la base du couple de freinage souhaité.

8. Procédé selon la revendication 7, **caractérisé en ce que** l'on distribue le couple de freinage souhaité sur les ensembles de freinage à commande électronique présents (2, 4, 20) en fonction de différents paramètres de fonctionnement du véhicule automobile.

9. Système de commande de chaîne de transmission (1) d'un véhicule automobile avec un moteur (2) et une boîte de vitesses automatique (4), qui comprend
- une commande de moteur (3) pour commander des grandeurs influençant le couple moteur,
- une commande de boîte de vitesses (6) pour commander la démultiplication de la boîte de vitesses automatique (4),
- une unité centrale de commande (25)
- pour convertir un actionnement de la pédale de frein (21) en un couple de freinage souhaité,
- pour déterminer une valeur de consigne du couple d'inertie du moteur sur la base du couple de freinage souhaité, et
- pour fixer la démultiplication de la boîte de vitesses automatique (4) en fonction de la valeur de consigne du couple d'inertie du moteur à l'aide d'un diagramme caractéristique de rétrogradation.

10. Système de commande de chaîne de transmission selon la revendication 9, **caractérisé en ce que** tous les ensembles de freinage à commande électronique présents (2, 4, 20) sont commandés par l'unité centrale de commande (25).
